(19) Europäisches Patentamt / European Patent Office / Office européen des brevets

(11) **EP 4 089 470 B1**

(12) **FASCICULE DE BREVET EUROPEEN**

(45) Date de publication et mention de la délivrance du brevet:
**08.11.2023 Bulletin 2023/45**

(21) Numéro de dépôt: **22172673.0**

(22) Date de dépôt: **10.05.2022**

(51) Classification Internationale des Brevets (IPC):
***G02B 27/01*** *(2006.01)*

(52) Classification Coopérative des Brevets (CPC):
**G02B 27/0172;** G02B 2027/0174; G02B 2027/0178

(54) **DISPOSITIF DE PROJECTION D'UNE IMAGE DANS L'OEIL D'UN UTILISATEUR**

VORRICHTUNG ZUM PROJEKTION EINES BILDES IN DAS AUGE DES BENUTZERS

DEVICE FOR PROJECTING AN IMAGE INTO THE EYE OF A USER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2021 FR 2105017**

(43) Date de publication de la demande:
**16.11.2022 Bulletin 2022/46**

(73) Titulaire: **Commissariat à l'énergie atomique et aux énergies alternatives**
**75015 Paris (FR)**

(72) Inventeurs:
• **RAINOUARD, Fabian**
**38054 GRENOBLE cedex 09 (FR)**
• **MARTINEZ, Christophe**
**38054 GRENOBLE cedex 09 (FR)**

(74) Mandataire: **INNOV-GROUP**
**310, avenue Berthelot**
**69372 Lyon Cedex 08 (FR)**

(56) Documents cités:
**FR-A1- 3 022 642     US-A1- 2014 204 455**

• **RAINOUARD FABIAN ET AL: "Improved mathematical model for a dense network of waveguide and electrode design", PROCEEDINGS OF SPIE, SPIE, 1000 20TH ST. BELLINGHAM WA 98225-6705 USA, vol. 11689, 5 mars 2021 (2021-03-05), pages 116891N-116891N, XP060140272, ISSN: 0277-786X, DOI: 10.1117/12.2578309 ISBN: 978-1-5106-4548-6**

**Description**

## DOMAINE TECHNIQUE

Le domaine technique de l'invention concerne la projection d'une image sur un oeil, dans des applications de type réalité augmentée.

## ART ANTERIEUR

Les dispositifs portables de réalité augmentée, tels que les lunettes, permettent d'observer une scène réelle tout en visualisant des informations complémentaires. Ce type de dispositif est fréquemment basé sur des micro-écrans, permettant de former une image à proximité immédiate d'un oeil d'un utilisateur. De tels micro-écrans peuvent par exemple être intégrés à une lunette. Un système optique, comportant un jeu de lentilles, permet la perception d'une image nette par l'œil.

Le brevet US9632317 décrit un dispositif permettant une projection, sur la rétine d'un oeil, sans écran ni système optique. Le dispositif comporte un circuit optique intégré transparent composé d'un réseau de guides de lumière nanométriques, d'un réseau d'électrodes et d'un film holographique. Un tel dispositif est compact, et permet d'obtenir un champ de vision étendu. De plus, cela permet de ne pas utiliser de système optique volumineux et de conception complexe.

La demande de brevet US2014204455 décrit un écran transparent destiné à former des pixels lumineux, arrangés selon une matrice.

FR 3 022 642 A1 divulgue un dispositif de projection pouvant être utilisé dans un dispositif d'affichage d'images en réalité augmentée destiné à être porté sur la tête.

RAINOUARD FABIAN ET AL: "Improved mathematical model for a dense network of waveguide and electrode design", PROCEEDINGS OF SPIE, SPIE, 1000 20TH ST. BELLINGHAM WA 98225-6705 USA, vol. 11689, 5 mars 2021 (2021-03-05), pages 116891N-116891N divulgue un concept de lunettes intelligentes pour les applications de réalité augmentée.

Les guides de lumière nanométriques permettent de définir un ensemble de points d'émission sur le film holographique, chaque point étant susceptible d'être illuminé par une lumière extraite d'un guide de lumière. L'ensemble de points d'émission est subdivisé en différents sous-ensembles, chaque sous-ensemble comportant des points d'émission répartis, le plus aléatoirement possible, sur le film holographique. Les points d'émission d'un même sous-ensemble peuvent être simultanément illuminés par les différents guides de lumière. Sous l'effet de l'illumination, chaque point d'émission du même sous-ensemble émet une onde lumineuse se propageant selon une même direction jusqu'à la pupille de l'œil, de façon à former un point lumineux unique au niveau de la rétine. De cette façon, chaque sous-ensemble de points d'émission permet une formation d'un pixel de l'image perçue par l'utilisateur. Une image peut être formée en illuminant successivement différents sous-ensembles de points, de façon à former une image comportant un nombre élevé de pixels. La fréquence d'illumination de chaque sous-ensemble de points est dimensionnée de façon que sous l'effet de la persistance rétinienne, l'utilisateur puisse ressentir une formation d'une image fixe, malgré la formation séquentielle des différents pixels de l'image.

Comme précédemment indiqué, il est préférable que dans un même sous-ensemble, les points d'émission soient répartis le plus aléatoirement possible, de façon à éviter des effets de Moiré lors de la formation de l'image sur la rétine.

Dans US9632317, la lumière est extraite de chaque guide de lumière en disposant, le long du guide de lumière, des réseaux de diffraction électriquement modulés. Les réseaux de diffraction sont espacés les uns des autres et définissent des zones ponctuelle d'extraction de lumière. Sous l'effet d'une activation électrique, chaque réseau de diffraction permet une extraction de la lumière se propageant dans un guide de lumière. Dans US9632317, les guides de lumière sont de forme sinusoïdale, et s'étendent parallèlement les uns aux autres.

Les inventeurs proposent une configuration optimisée, de façon à augmenter la densité de points d'émission susceptibles d'être activés, tout en conservant une répartition pseudo-aléatoire. En effet, plus la densité de points d'émission est élevée, plus le nombre de pixels de l'image formée augmente. Cela permet d'augmenter la quantité d'information contenue dans chaque image.

## EXPOSE DE L'INVENTION

Un premier objet de l'invention est un dispositif selon la revendication 1.

Ainsi, l'axe longitudinal peut être divisé en plusieurs tronçons longitudinaux, la surface d'émission étant segmentée en bandes longitudinales, chaque bande longitudinale s'étendant perpendiculairement à un tronçon longitudinal. Le long d'une même bande longitudinale, les segments rectilignes de différents guides de lumière sont parallèles les uns aux autres.

Selon un mode de réalisation :

- la surface d'émission est délimitée par une bordure ;
- des guides de lumière sont parallèles les uns aux autres, selon une direction sécante de la bordure ;
- au moins un guide de lumière s'étend parallèlement à la bordure.

Selon un mode de réalisation, les angles aigus formés par deux segments rectilignes successifs d'un guide de lumière, par rapport à l'axe longitudinal, sont de signes opposés. Les angles aigus formés par des segments rectilignes successifs d'un guide de lumière, par rapport à l'axe longitudinal, peuvent avoir la même valeur absolue.

L'angle aigu, formé par chaque segment rectiligne d'un guide de lumière, avec l'axe longitudinal, est compris entre 20° et 45 en valeur absolue.

La densité de segments rectilignes peut être comprise entre 0.5 et 5 segments par mm selon l'axe longitudinal.

Au moins deux segments rectilignes d'un même guide de lumière peuvent s'étendre selon deux longueurs différentes respectivement.

Selon un mode de réalisation

- chaque électrode s'étend en formant des segments rectilignes, deux segments rectilignes successifs d'une même électrode formant respectivement deux angles aigus différents par rapport à un axe latéral;
- des segments rectilignes de différentes électrodes sont disposés parallèlement les uns aux autres, en étant notamment décalés les uns des autres selon une direction perpendiculaire à l'axe latéral.

Ainsi, l'axe latéral peut être divisé en plusieurs tronçons latéraux, la surface d'émission étant segmentée en bandes latérales, chaque bande latérale s'étendant perpendiculairement à un tronçon latéral. Le long d'une même bande latérale, les segments rectilignes de différentes électrodes sont parallèles les uns aux autres.

Selon une possibilité :

- la surface d'émission est délimitée par une bordure ;
- des segments d'électrodes sont parallèles les uns aux autres, selon une direction sécante de la bordure ;
- au moins un segment d'une électrode s'étend parallèlement à la bordure.

Les angles aigus formés par les segments rectilignes successifs d'une électrode, par rapport à l'axe latéral, peuvent avoir des signes opposés. Les angles aigus respectivement formés par deux segments rectilignes successifs d'une électrode, par rapport à l'axe latéral, peuvent avoir la même valeur absolue.

L'angle aigu, formé par chaque segment rectiligne d'une électrode, avec l'axe latéral, est compris entre 20° et 45 en valeur absolue.

Chaque électrode peut comporter une densité de segments rectilignes comprise entre 0.5 et 5 segments par mm selon l'axe latéral.

Au moins deux segments rectilignes d'une même électrode s'étendent selon deux longueurs différentes respectivement.

L'axe latéral peut notamment être perpendiculaire de l'axe longitudinal.

L'empilement peut être formé sur un support transparent.

Les points d'émission sont de préférence répartis en formant des sous-ensembles, les points d'émission d'un même sous-ensemble étant formés par un groupe d'électrodes superposées à groupe de guides de lumière, de telle sorte que chaque électrode du groupe d'électrodes est configurée pour moduler les réseaux de diffraction couplés à différents guides de lumière du groupe de guides de lumière. Les points d'émission d'un même sous-ensemble sont configurés pour émettre une onde lumineuse selon un même vecteur d'onde. Le nombre de points d'émission de chaque sous-ensemble est de préférence supérieur à 40.

Le dispositif peut comporter un film holographique, subdivisé en différentes zones élémentaires, chaque zone élémentaire étant associée à un réseau de diffraction, et configurée pour émettre une onde lumineuse, selon un axe d'émission, sous l'effet d'une lumière extraite par le réseau de diffraction auquel elle est associée, chaque association entre une zone élémentaire et un réseau de diffraction formant un point d'émission de lumière selon l'axe d'émission.

Un autre objet de l'invention est une lunette, comportant des verres de lunette, la lunette comportant un dispositif selon le premier objet de l'invention, l'empilement étant formé sur au moins un verre de la lunette.

L'invention sera mieux comprise à la lecture de l'exposé des exemples de réalisation présentés, dans la suite de la description, en lien avec les figures listées ci-dessous.

## FIGURES

La figure 1A schématise le principe de l'auto-focalisation de points d'émission sur une rétine d'un utilisateur.

La figure 1B montre un exemple de sous-ensemble de points d'émission répartis sur une surface d'émission.

La figure 1C illustre une étape d'enregistrement d'hologrammes sur un film holographique.

La figure 1D illustre une étape d'émission d'une onde lumineuse par des points d'émission formés sur le dispositif.

La figure 2A correspond à une implantation de guides de lumière et d'électrodes selon l'art antérieur.

La figure 2B montre deux guides de lumière adjacents, selon la configuration telle que décrite en lien avec la figure 2A.

La figure 3A représente un exemple de répartition de guides de lumière selon l'invention.

La figure 3B montre un autre exemple de répartition de guides de lumière selon l'invention.

La figure 3C montre une possibilité de répartition d'électrodes sur les guides de lumière schématisés sur la figure 3B.

La figure 3D montre un exemple de répartition d'électrodes selon l'invention.

La figure 3E illustre une répartition de guides de lumière et d'électrodes selon l'invention.

La figure 3F représente un exemple de variante de l'invention, selon laquelle certains guides de lumière peuvent localement s'étendre selon une direction prédéterminée, par exemple parallèlement à une bordure.

La figure 4A montre le nombre de points d'émission (axe des ordonnées) en fonction de l'angle d'inclinaison des guides de lumière et des électrodes (axe des abscisses), en prenant en compte un nombre de pics égal à 25. La figure 4A résulte d'une modélisation d'un exemple de réalisation.

La figure 4B illustre une réponse percursionnelle (ou Point Spread Function - réponse impulsionnelle), d'un dispositif selon l'invention. La figure 4B permet d'illustrer des indicateurs de performance du dispositif.

La figure 4C montre une évolution d'un paramètre, désigné par le terme « gamma » représentatif d'une qualité d'image formée. Sur la figure 4C, le paramètre gamma (axe des ordonnées) a été simulé pour différents nombre de pics (axe des abscisses) et différents angles d'inclinaison des guides de lumière et des électrodes, selon l'exemple de réalisation considéré dans la figure 4A.

La figure 4D montre une évolution d'un rapport signal sur bruit représentatif d'une qualité d'image formée. Sur la figure 4D, le rapport signal sur bruit (axe des ordonnées) a été simulé pour différents nombres de pics (axe des abscisses) et différents angles d'inclinaison des guides de lumière et des électrodes.

La figure 4E montre une variabilité de rapports signal sur bruit (axe des ordonnées) simulés pour différentes configurations (axes des abscisses), la variabilité étant représentée sous la forme de boites à moustaches (boxplot).

## EXPOSE DE MODES DE REALISATION PARTICULIERS

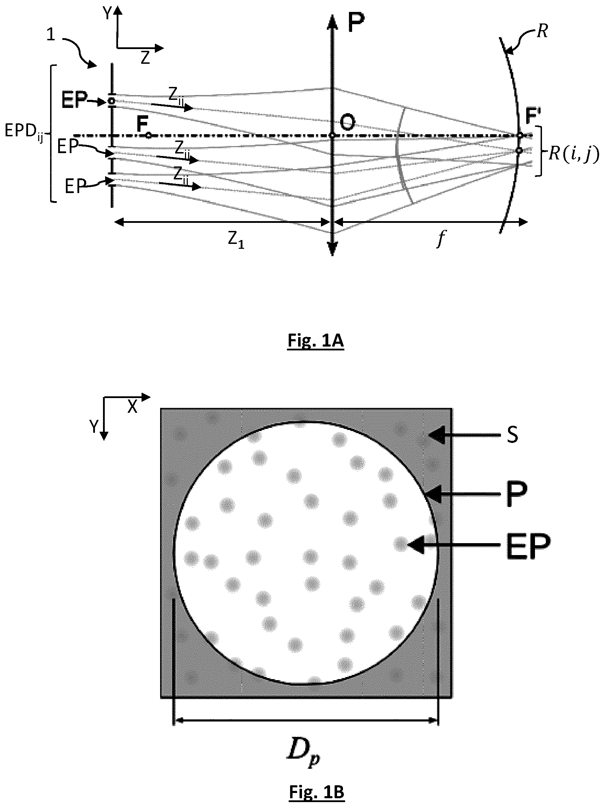

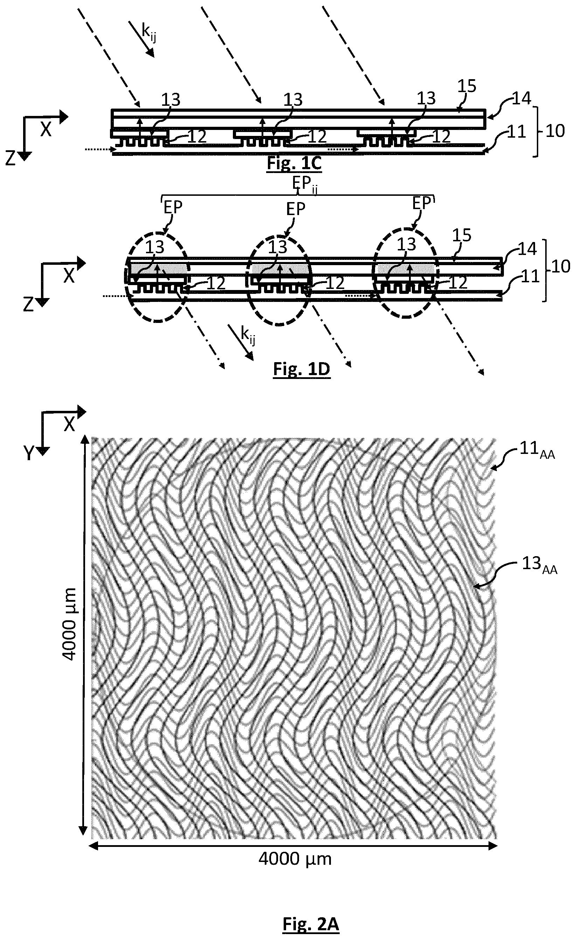

Les figures 1A à 1C illustrent les principes sur lesquels se base l'invention. Ces principes sont décrits dans la publication Martinez C, « See-through holographic retinal projection display concept », Optica, Vol. 5, N° 10, October 2018. Un dispositif de projection 1 est disposé face à une pupille P d'un oeil, cette dernière focalisant la lumière sur la rétine R de l'œil. Le dispositif de projection comporte une surface d'émission S, formée d'un film holographique. La surface d'émission S est formée d'un ensemble de points d'émission EP, chaque point d'émission correspondant à une zone élémentaire du film holographique susceptible d'être illuminée, de façon cohérente, par une structure d'illumination, cette dernière étant décrite en lien avec la figure 1C. La surface d'émission est disposée à une distance $Z_1$ de la pupille P. La pupille P est disposée à la distance focale f de la rétine R. On a représenté un point focal objet F et un point focal image F'.

Chaque point d'émission *EP* est configuré pour émettre une lumière selon un axe d'émission $Z_{ij}$ vers la pupille P. Les points d'émission *EP* sont répartis en différents sous-ensembles *EPD$_{ij}$*, (Distribution de points d'émission) de telle sorte que les points d'émission d'un même sous-ensemble émettent tous une lumière parallèlement à un même axe d'émission. Comme décrit en lien avec l'art antérieur, il est avantageux que les points d'émission EP d'un même sous-ensemble *EPD$_{ij}$* soient répartis de façon pseudo-aléatoire sur la surface d'émission S. La figure 1B représente un sous-ensemble de points d'émission configurés pour émettre une lumière se propageant, vers la pupille P, parallèlement à un même axe $Z_{ij}$.

Comme représenté sur la figure 1A, chaque point d'émission EP est configuré pour émettre, sous l'effet d'une illumination cohérente, une onde lumineuse se propageant selon un vecteur d'onde $\vec{k}_{ij}$ vers la pupille P. Lorsque l'illumination de chaque point d'émission *EP* est temporellement cohérente, les ondes lumineuses respectivement émises par les différents points d'émission d'un même sous-ensemble *EPD$_{ij}$* se propagent selon un même vecteur d'onde $\vec{k}_{ij}$, de façon cohérente, jusqu'à la pupille P. La relation de phase entre les différentes ondes lumineuses, respectivement émises par les points d'émission d'un même sous-ensemble, permet de former une onde plane ou, d'une façon plus générale, une onde dont le front d'onde est maîtrisé. Ainsi, le front d'onde peut avoir une forme plane, ou encore sphérique ou parabolique. En aval de la pupille, chaque onde lumineuse de même vecteur d'onde $\vec{k}_{ij}$, converge sensiblement jusqu'à un même point $R(i,j)$ sur la rétine R.

Le dispositif de projection 1 permet ainsi de former une image, sur la rétine R, l'image étant discrétisée en plusieurs pixels $R(i,j)$, chaque pixel $R(i,j)$ correspondant au pixel d'une image formée, par le dispositif de projection 1, sur la sur la rétine R.

L'intensité lumineuse au niveau du pixel $R(i,j)$ résulte de la contribution de chaque onde lumineuse, de même vecteur d'onde $\vec{k}_{ij}$ résultant de chaque point d'émission $EP$ d'un même sous-ensemble $EPD_{ij}$. L'indice $ij$ correspond à une coordonnée angulaire de l'onde lumineuse qui, après focalisation par la pupille (ou auto-focalisation), converge vers le pixel $R(i,j)$ sur la rétine.

La surface d'émission est discrétisée en différents sous-ensembles $EPD_{ij}$, chaque sous ensemble comportant plusieurs points d'émission EP répartis sur la surface d'émission, chaque sous-ensemble étant associé à une même direction de propagation angulaire, donnée par le vecteur d'onde $\vec{k}_{ij}$, vers la pupille.

La figure 1C schématise la structure du dispositif de projection 1. Le dispositif de projection est formé de plusieurs couches transparentes superposées les unes aux autres. Le dispositif de projection comporte :

- une première couche, dans laquelle sont formés des guides de lumière 11. Les guides de lumière sont configurés pour recevoir une lumière cohérente, émise par une source laser décrite par la suite, et pour propager la lumière cohérente le long de la surface d'émission S. Les guides de lumière peuvent par exemple être formés de SiN (nitrure de silicium) déposé sur du verre. Ils peuvent s'étendre selon une épaisseur et une largeur comprise entre 200 nm et 300 nm.
- une deuxième couche, dans laquelle sont formés des réseaux de diffraction 12, de telle sorte que chaque réseau de diffraction 12 est couplé avec un guide de lumière 11. Les réseaux de diffraction 12 sont électriquement modulés. Chaque réseau de diffraction 12 correspond à une variation périodique d'indice de réfraction, susceptible d'être modulée électriquement. Les réseaux de diffraction 12 couplés à un même guide de lumière 11 sont espacés les uns des autres le long du guide de lumière, et sont considérés comme ponctuels. Chaque réseau de diffraction 12 peut être formé d'inclusions, définissant un motif périodique, dans de l'oxyde de silicium ($SiO_2$), chaque inclusion étant formée d'un matériau dont l'indice de réfraction est électriquement modulable, par exemple un cristal liquide. Lorsque la longueur d'onde de la lumière est de 532 nm, la période du motif du réseau de diffraction 12 peut être compris entre 300 nm et 400 nm. Un réseau de diffraction peut s'étendre selon 10 motifs périodiques, et s'étendre ainsi sur une longueur de 3 ou 4 $\mu$m.
- une troisième couche, dans laquelle sont formées des électrodes transparentes 13, les électrodes étant configurées pour moduler électriquement l'indice de réfraction d'un matériau formant les réseaux de diffraction. Les électrodes transparentes peuvent être formées d'un matériau conducteur transparent, par exemple ITO (oxyde d'indium étain). Chaque électrode peut ainsi activer un réseau de diffraction sous l'effet de la modulation électrique.
- une quatrième couche, correspondant à un film holographique 14. Par film holographique, il est entendu un support photosensible susceptible d'enregistrer un hologramme. Le film holographique est supposé suffisamment fin pour être assimilé à la surface d'émission. Le film holographique peut être un photopolymère, par exemple du poly(méthacrylate de méthyle), ou une photorésine.

L'empilement 10 est de préférence formé sur un support 15 transparent. Il peut par exemple s'agir d'un support en verre ou en polycarbonate. Le support 15 peut être un verre de lunette ou une visière.

Sous l'effet d'une polarisation par une électrode 13, chaque réseau de diffraction ponctuel 12 est activé, au sens où il permet une extraction d'une partie de la lumière se propageant dans un guide de lumière 11 auquel le réseau de diffraction 12 est couplé. La lumière extraite se propage vers un film holographique 14, et plus précisément vers une zone élémentaire du film holographique 14. Sous l'effet de l'illumination, la zone élémentaire du film holographique forme un point d'émission EP, émettant une onde lumineuse selon un vecteur d'onde et un déphasage prédéterminés. La phase de l'onde lumineuse émise par le point d'émission dépend de l'information de phase stockée dans le film holographique, comme décrit par la suite. Les ondes lumineuses émises par différents points d'émission $EP$ d'un même sous-ensemble $EPD_{ij}$ sont déphasées les unes par rapport aux autres de façon que l'ensemble de ces ondes lumineuses forme une onde cohérente, par exemple plane, se propageant vers la pupille.

Ainsi, chaque point d'émission EP correspond à une superposition, parallèlement à la surface d'émission, entre un réseau de diffraction ponctuel 12 couplé à un guide de lumière 11, et d'une électrode 13, face à une zone élémentaire du film holographique 14. L'association entre chaque électrode 13 et chaque réseau de diffraction 12 forme une structure d'extraction d'une partie de la lumière se propageant dans un guide de lumière 11.

Les guides de lumière 11 sont agencés parallèlement à la surface d'émission S. Il en est de même des électrodes 13. Ainsi, les électrodes 13 sont superposées aux guides de lumière 11. Parallèlement à la surface d'émission S, chaque électrode « croise » plusieurs guides de lumière, de façon à définir plusieurs intersections, chaque intersection correspondant à une position d'un point d'émission EP. Le terme « croiser » est à interpréter comme désignant une superposition d'une électrode et d'un guide de lumière. Sur la figure 1C, à des fins de simplification, on a représenté un guide de lumière 11 couplé à trois réseaux de diffraction 12, ces derniers étant connectés à trois électrodes différentes 13, ces dernières étant orientées perpendiculairement au guide de lumière 11.

Le film holographique 14 a préalablement fait l'objet d'un enregistrement holographique. De façon connue, un hologramme est formé par une interférence entre deux ondes lumineuses émises par une source de lumière cohérente: une onde lumineuse objet et une onde lumineuse de référence. Les franges d'interférence générées sont mémorisées physiquement ou chimiquement dans le film holographique 14. Lors de la phase d'enregistrement, la lumière extraite d'un guide de lumière 11 fait office de faisceau de référence. Sur la figure 1C, on a représenté :

- par des flèches en pointillés, une lumière émise par la source laser et se propageant dans un guide de lumière 11;
- par des flèches en tirets plein, la lumière extraite de chaque guide de lumière 11, respectivement par trois réseaux de diffractions 12, sous l'effet d'une activation par les trois électrodes 13.

Le faisceau objet est un faisceau se propageant vers le film holographique selon un vecteur d'onde $\vec{k}_{ij}$, de façon à converger en un point $R(i,j)$ de la rétine par autofocalisation. Lors de l'étape d'enregistrement, le faisceau objet peut être émis par une source collimatée.

Sur la figure 1C, on a représenté trois faisceaux objets se propageant selon une même direction de propagation $\vec{k}_{ij}$, matérialisée par des flèches en tirets. La direction de propagation est fixée par l'hologramme. Les faisceaux objets et chaque faisceau de référence sont émis par la même source laser. La phase d'enregistrement consiste à stocker des hologrammes, dans différentes zones élémentaires du film holographique 14, chaque enregistrement résultant d'une interférence entre un faisceau objet, se propageant selon une direction prédéterminée $\vec{k}_{ij}$, et un faisceau de référence extrait d'un guide de lumière. Au cours de l'enregistrement :

- différentes zones élémentaires du film holographique 14 sont exposées à un faisceau objet de même direction de propagation $\vec{k}_{ij}$, de façon à former un sous-ensemble $EPD_{ij}$ de points d'émission EP correspondant à la même direction de propagation. Lors de cette exposition, les points d'émission du sous-ensemble $EPD_{ij}$ sont illuminés par le faisceau de référence, ce dernier étant extrait des guides de lumière. Les autres zones élémentaires du film holographique 14, situées face à des points appartenant à d'autres sous-ensembles, sont masquées.
- différentes zones élémentaires du film holographique 14 sont respectivement exposées à différents faisceaux objets se propageant selon différentes directions, de façon à former des points d'émission associés à des directions d'émission différentes.

La figure 1D illustre la phase d'utilisation du dispositif 1. Sur cette figure, on a représenté, sous forme grisée, les zones élémentaires du film holographique 14 ayant enregistré un hologramme lors de l'étape d'enregistrement holographique. Sous l'effet d'une activation par des électrodes 13, une partie de la lumière laser se propageant dans le guide de lumière 11 est extraite et se propage vers le film holographique 14, comme décrit en lien avec la figure 1C. Sous l'effet de l'illumination extraite, chaque hologramme stocké dans le film photosensible diffracte une onde qui correspond à l'onde objet au moment de l'enregistrement, et en particulier selon la direction de propagation $\vec{k}_{ij}$. L'onde diffractée est représentée par des tirets mixtes sur la figure 1D. Lors de l'utilisation du dispositif :

- les points d'émission $EP$ correspondant à un même sous-ensemble $EPD_{ij}$, associé à une même direction de propagation $\vec{k}_{ij}$, sont activés simultanément : on forme ainsi des ondes diffractées cohérentes, se propageant vers la pupille P, selon un même vecteur d'onde $\vec{k}_{ij}$: les ondes diffractées convergent en un même pixel $R(i,j)$ sur la rétine. Ce sous-ensemble, résultant de la superposition entre des guides de lumière 11 et des électrodes 13, est défini par le choix d'une distribution spatiale de guides de lumière et d'électrodes.
- De façon simultanée, un autre réseau $EPD_{i,j}$, peut produire des ondes diffractées cohérentes se propageant vers la pupille P, selon un même vecteur d'onde $\vec{k}_{i,j}$, les ondes diffractées convergeant en un pixel $R(i', j')$ sur l'image formée au niveau de la rétine, les points d'émission du réseau $EPD_{i,j}$, étant illuminés par une lumière extraite d'autres guides de lumière illuminés par une autre source laser et activés par le même groupe d'électrodes.
- Des points d'émission $EP$ de différents sous-ensemble $EPD_{ij}$ peuvent être activés séquentiellement, de façon à converger séquentiellement vers différents pixels sur la rétine.

Les électrodes 13 et les guides de lumière 11 sont répartis en formant des groupes. Un sous-ensemble $EPD_{ij}$ correspond à des points d'émission $EP$ formés par une superposition des électrodes d'un groupe d'électrode sur des guides de lumière du groupe de guides de lumière. Ainsi, chaque sous-ensemble $EPD_{ij}$, formant un pixel R(i,j), est associé à un seul groupe de guides de lumière 11 et à un seul groupe d'électrodes 13.

Comme précédemment évoqué, du fait de la persistance rétinienne, lorsque la fréquence d'activation des différents sous-ensembles est suffisamment rapide, l'utilisateur perçoit une image formée par les différents pixels R(i,j).

Si $N_{las}$ désigne le nombre de sources laser différentes utilisées simultanément, pouvant illuminer des groupes de guides de lumière différents, on peut former simultanément $N_{las}$ pixels, (c'est-à-dire $N_{las}$ sous-ensembles $EPD_{ij}$) suite à l'activation d'un même groupe d'électrodes. Si $N_{el}$ désigne le nombre de groupes d'électrodes différents, successivement activés, sous l'effet de la persistance rétinienne, l'utilisateur peut percevoir une image, formée sur la rétine, de $N_{el} \times N_{las}$ pixels.

La position de chaque point d'émission $EP$ d'un même sous-ensemble $EPD_{ij}$ est définie par une activation d'une partie des électrodes 13 et une propagation d'une lumière dans une partie des guides de lumière 11.

La conception d'un dispositif de projection tel que précédemment décrit est confrontée à des contraintes de compacité : on considère que le diamètre $D_p$ d'une pupille est de l'ordre de 4 mm. Par ailleurs, la surface d'émission S est supérieure à la surface d'une pupille, de façon que l'œil puisse se déplacer en vis-à-vis de la surface, sans qu'une dégradation de l'image formée sur la rétine ne soit perçue.

Un autre impératif concerne la densité des points d'émission. Chaque pixel $R(i,j)$ de l'image projetée sur la rétine correspond à un sous-ensemble $EPD_{ij}$ de points d'émission $EP$ associé à une même direction de propagation $\vec{k}_{ij}$. Plus le nombre de points d'émission $EP$ contribuant au même pixel est élevée, meilleure est la qualité du pixel. Le nombre de points d'émission d'un même sous-ensemble est de préférence supérieur à 40, voire supérieur à 55 ou 60.

Par ailleurs, le nombre de sous-ensembles des points d'émission $EPD_{ij}$ correspond au nombre de pixels R(i, j) formés sur l'image. Afin d'augmenter le nombre de pixels de l'image formée sur la rétine, il faut augmenter le nombre de sous-ensembles $EPD_{ij}$ respectivement associés à différentes directions de propagation $\vec{k}_{ij}$.

La densité des points d'émission EP est toutefois limitée par des contraintes de conception : afin d'éviter un couplage optique entre deux guides de lumière adjacents, un espacement $d_{min}$, par exemple égal à 1.5 $\mu$m doit être maintenu. La largeur d'une électrode est de l'ordre de grandeur de la taille d'un réseau de diffraction, soit comprise entre 3 et 4 $\mu$m, ce qui correspond à 10 périodes d'un réseau de diffraction. Ainsi, l'espacement $d'_{min}$, centre à centre, entre deux électrodes adjacentes, est supérieur ou égal à 3 ou 4 $\mu$m. Afin de multiplier le nombre de points d'émission, il faut rapprocher les guides de lumière adjacents ainsi que les électrodes adjacentes, tout en respectant les contraintes d'espacement minimal.

L'obtention d'un point d'émission EP résulte d'une intersection, ou plus exactement d'une superposition, entre une électrode 13 et un guide de lumière 11. En considérant une configuration selon laquelle les électrodes et les guides de lumière sont orthogonaux, formant un quadrillage (lignes parallèles de guides de lumière, colonnes parallèles d'électrodes), le nombre total de points d'émission qui forment l'image est tel que :

$$N = \frac{S_{pup}}{d_{min}d'_{min}} \ (2)$$

où $S_{pup}$ correspond à la surface de la pupille.

La densité maximale des points d'émission est telle que :

$$\mathcal{D} = \frac{1}{d_{min}d'_{min}} \ (3)$$

Cependant, comme décrit en lien avec l'art antérieur, par exemple dans US9632317, lorsque les guides de lumière et les électrodes sont disposés perpendiculairement les uns aux autres, en formant des lignes et des colonnes, les points d'émission EP sont régulièrement répartis. Cela entraîne une dégradation de l'image formée du fait de la périodicité spatiale des points d'émission.

La figure 2A illustre un agencement d'électrodes et de guides de lumière tel que décrit dans US9632317. Selon cet agencement :

- les guides de lumière 11$_{AA}$ s'étendent selon des courbes sinusoïdales, le long d'un axe longitudinal X. Deux guides de lumière adjacents sont translatés l'un par rapport l'autre, perpendiculairement à l'axe X.
- les électrodes 13$_{AA}$ s'étendent, selon une surface parallèle à la surface d'émission, selon des courbes sinusoïdales, le long d'un axe latéral Y. Deux électrodes adjacentes sont translatées l'une par rapport l'autre, perpendiculairement à l'axe Y.

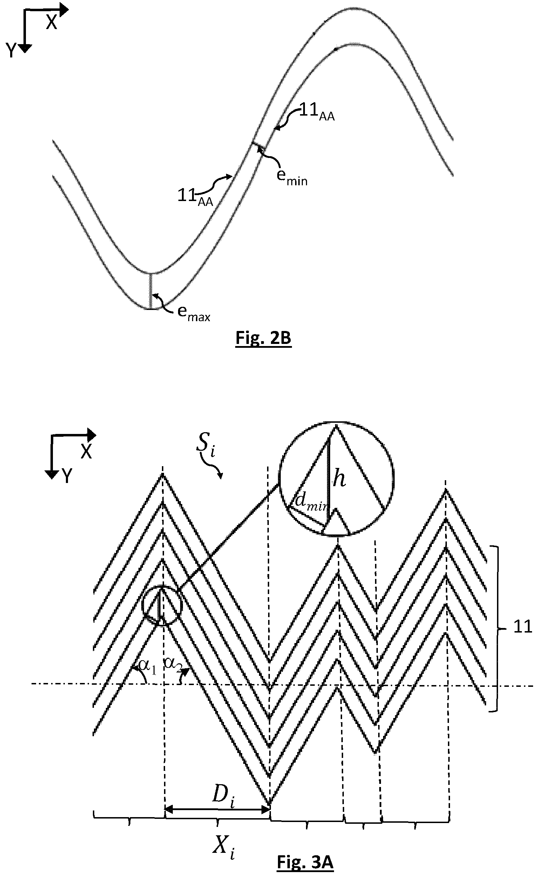

Un inconvénient de la structure décrite en lien avec la figure 2A résulte d'un espacement variable entre deux guides de lumière adjacents (ou entre deux électrodes adjacentes). Sur la figure 2B, on observe que l'espacement peut passer d'une valeur minimale $e_{min}$ à une valeur maximale $e_{max}$, l'écartement maximal correspondant à une distance de translation perpendiculairement à l'axe X. Cette variation entre l'écartement minimal $e_{min}$ et la distance de translation $e_{max}$ réduit la densité des points d'émission.

Les inventeurs proposent une autre configuration, permettant d'augmenter la densité de points d'émission, de façon à se rapprocher de la densité explicitée dans (3). Selon cette configuration, chaque guide de lumière comporte une succession des segments rectilignes. Chaque segment rectiligne est incliné d'un angle aigu $\alpha$ par rapport à un axe longitudinal X. Le long de chaque guide de lumière, l'angle aigu $\alpha$ est parfois positif, parfois négatif. De cette façon, chaque guide de lumière s'étend de part et d'autre d'un axe d'extension parallèle à l'axe longitudinal X. Sur la figure 3A, l'axe d'extension, de part et d'autre duquel s'étendent des guides de lumière, est représenté par un trait mixte.

Sur la figure 3A, on a représenté un exemple de guides de lumière formant des segments rectilignes, et pour lesquels l'angle $\alpha$ est alternativement positif et négatif. Par angle d'inclinaison, on entend l'angle aigu orienté entre l'axe longitudinal X, et le guide de lumière. On a représenté un premier angle $\alpha_1$ négatif et un deuxième angle $\alpha_2$ positif. Comme décrit par la suite, il est préférable que la valeur absolue de l'angle $\alpha$ soit de préférence comprise entre 25° et 45°, et encore de préférence entre 30° et 40°.

Ainsi, chaque guide de lumière s'étend en formant des segments rectilignes, deux segments rectilignes successifs d'un même guide de lumière formant respectivement deux angles aigus différents par rapport à l'axe longitudinal X. Il peut s'agir du même angle aigu en valeur absolue, alternativement positif ou négatif.

Les segments rectilignes de deux guides de lumière adjacents sont translatés l'un par rapport à l'autre selon une direction perpendiculaire à l'axe longitudinal X. La distance de translation h entre deux guides de lumière adjacents est telle que :

$$h \geq \frac{d_{min}}{\cos(\alpha)} \quad (4)$$

où $d_{min}$ est l'écartement minimal entre deux guides de lumière adjacents.

Afin de maximiser le nombre de points d'émission EP, il est préférable que la distance de translation soit la plus faible possible, tout en respectant l'écartement minimal. Cela correspond à :

$$h = \frac{d_{min}}{\cos(\alpha)} \quad (5)$$

Plus la valeur absolue de l'angle d'inclinaison est élevée, plus la distance de translation h, perpendiculairement à l'axe longitudinal X, est élevée. L'écartement minimal $d_{min}$ est par exemple de 1.5 $\mu$m.

Selon une telle configuration, l'axe longitudinal X le long duquel s'étendent les guides de lumière 11 peut être virtuellement subdivisé en tronçons longitudinaux $X_i$, les tronçons longitudinaux se succédant selon l'axe longitudinal X. Sur la figure 3A, chaque tronçon longitudinal est matérialisé par une accolade. La surface d'émission peut être virtuellement divisée en bandes longitudinales $S_i$, chaque bande longitudinale s'étendant perpendiculairement à un tronçon longitudinal $X_i$. Dans chaque bande longitudinale $S_i$, les segments rectilignes des guides de lumière 11 sont inclinés selon un même angle $\alpha$ par rapport à l'axe longitudinal X, et translatés les uns par rapport aux autres selon une direction perpendiculaire à l'axe longitudinal. Ainsi, dans chaque bande longitudinale $S_i$, les segments rectilignes des guides de lumière sont parallèles les uns par rapport aux autres. Sur la figure 3A, les bandes longitudinales sont matérialisées par des pointillés. La distance de translation h entre deux segments rectilignes de guides de lumière adjacents est de préférence identique pour l'ensemble des guides de lumière, et satisfait aux expressions (4) et de préférence (5).

De préférence, le long de chaque guide de lumière 11, la valeur absolue de l'angle d'inclinaison $\alpha$ est identique.

De préférence, la longueur de chaque segment rectiligne est déterminée aléatoirement, entre une borne minimale et une borne maximale préalablement déterminées. Ainsi, au moins deux segments rectilignes d'un même guide de lumière, voire la plupart des segments rectilignes d'un même guide de lumière, présentent des longueurs différentes. Par la plupart des segments, on entend au moins 50% ou 80% ou 90% des segments. Le fait que la longueur de chaque segment rectiligne des guides de lumière soit déterminée aléatoirement favorise une répartition aléatoire des points d'émission EP, ce qui améliore la qualité des images. Comme décrit par la suite, il est possible de déterminer aléatoirement la longueur $D_i$ de chaque tronçon longitudinal $X_i$, selon l'axe X, ce qui revient, connaissant l'angle $\alpha$, à définir la longueur de chaque segment rectiligne des guides de lumière.

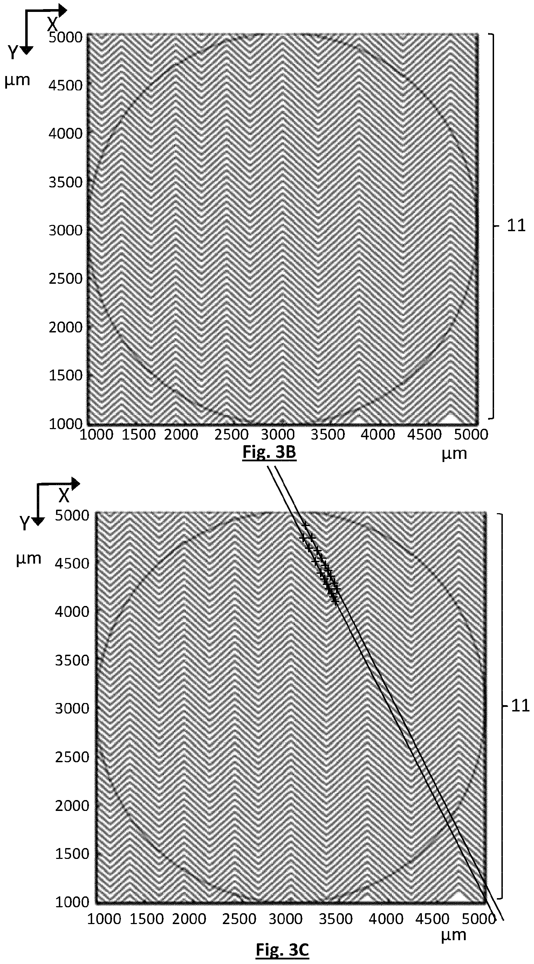

La figure 3B représente un exemple de répartition de guides de lumière 11 selon un mode de réalisation. On a représenté, sur la figure, un diamètre de pupille de 4 mm.

Sur chaque guide de lumière, l'interface entre deux segments rectilignes d'inclinaisons différentes doit être arrondie, de façon à faciliter le guidage de la lumière à l'intérieur du guide de lumière. Aussi, deux segments rectilignes successifs ne sont pas forcément jointifs, mais reliés l'un à l'autre par une jonction arrondie.

La figure 3C représente la structuration des guides de lumière 11 telle que décrite sur la figure 3B, ainsi que quelques électrodes 13. Seules deux électrodes ont été représentés pour une question de lisibilité. Selon cette configuration, les électrodes sont rectilignes et disposées parallèlement les unes aux autres. Chaque électrode est configurée de façon à « croiser », parallèlement à la surface d'émission, plusieurs guides de lumière. Cela permet une extraction de la lumière se propageant à travers différents guides de lumière en utilisant une même électrode. Sur la figure 3C, on a représenté la position de points d'émission EP, chaque position étant symbolisée par une croix.

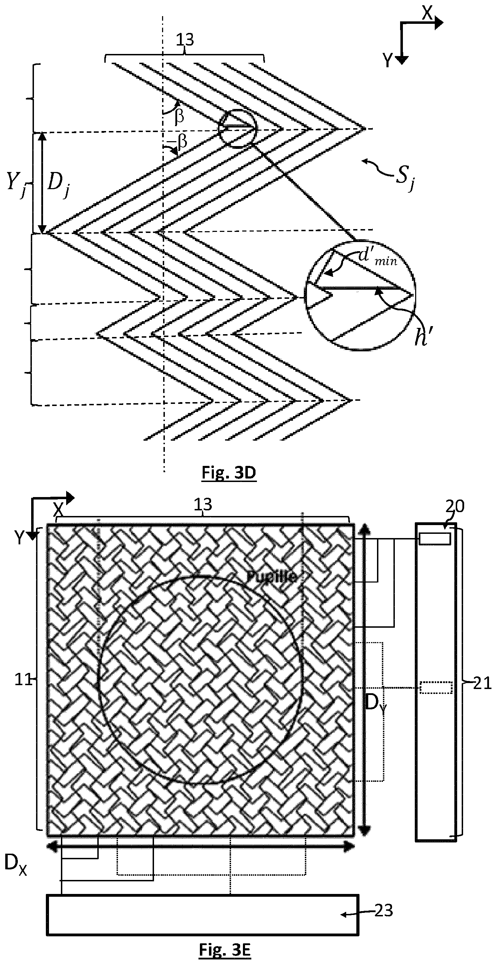

Les inventeurs considèrent qu'il est avantageux que la configuration des électrodes soit similaire à la configuration des guides de lumière, en étant orientée différemment. Ainsi, de même que les guides de lumière, il est préférable que les électrodes 13 forment des segments rectilignes, parallèles les uns aux autres, comme représenté sur la figure 3D. Les segments sont inclinés d'un angle d'inclinaison $\beta$ par rapport à un axe latéral Y. Le long d'une même électrode, l'angle $\beta$ peut être parfois positif, parfois négatif. De cette façon, chaque électrode 13 s'étend de part et d'autre d'un axe parallèle à l'axe latéral Y. Comme décrit sur la figure 3A, en lien avec les guides de lumière, l'angle d'inclinaison peut être alternativement positif et négatif. Par angle d'inclinaison $\beta$, on entend l'angle aigu orienté entre l'axe latéral Y et l'électrode. Comme décrit par la suite, il est préférable que la valeur absolue de l'angle $\beta$ soit de préférence comprise entre 25° et 45°, et encore de préférence entre 30° et 40°.

Selon une telle configuration, l'axe latéral Y peut être virtuellement subdivisé en tronçons latéraux Y, les tronçons latéraux se succédant selon l'axe latéral Y. Deux segments rectilignes successifs d'une même électrode 13 forment respectivement deux angles aigus différents par rapport à l'axe latéral Y. Il peut s'agir du même angle aigu en valeur absolue, alternativement positif ou négatif.

Sur la figure 3D, chaque tronçon latéral $Y_j$ est matérialisé par une accolade. La surface d'émission peut être virtuellement divisée en bandes latérales $S_j$, chaque bande latérale s'étendant perpendiculairement à un tronçon latéral $Y_j$. Dans chaque bande latérale $S_j$, les segments rectilignes des électrodes sont inclinés selon un même angle $\beta$ par rapport à l'axe latéral Y, et translatés les uns par rapport aux autres selon une direction perpendiculaire à l'axe latéral. Ainsi, dans chaque bande latérale $S_j$, les segments rectilignes des électrodes sont parallèles les uns par rapport aux autres et inclinés selon un même angle $\beta$ par rapport à l'axe latéral Y. Sur la figure 3D, les bandes latérales sont matérialisées par des pointillés.

Les segments rectilignes de deux électrodes adjacentes sont translatés l'un par rapport à l'autre selon une direction perpendiculaire à l'axe latéral Y. La distance de translation $h'$ entre deux électrodes adjacentes est telle que :

$$h' \geq \frac{d'_{min}}{\cos(\beta)} \quad (4')$$

où $d'_{min}$ est l'écartement minimal entre deux électrodes adjacentes.

Afin de maximiser le nombre de points d'émission EP, il est préférable que la distance de translation soit la plus faible possible, tout en respectant l'écartement minimal. Cela correspond à :

$$h' = \frac{d'_{min}}{\cos(\beta)} \quad (5')$$

Plus la valeur absolue de l'angle d'inclinaison est élevée, plus la distance de translation h', perpendiculairement à l'axe latéral, est élevée. L'écartement minimal $d'_{min}$ est par exemple de 4 $\mu$m.

De préférence, la longueur de chaque segment rectiligne d'électrode est déterminée aléatoirement, entre une borne minimale et une borne maximale préalablement déterminées. Ainsi, au moins deux segments rectilignes d'une même électrode, voire la plupart des segments rectilignes d'une même électrode, présentent des longueurs différentes. Par la plupart des segments, on entend au moins 50% ou 80% ou 90% des segments. Comme expliqué en lien avec les guides de lumière, le fait que la longueur de chaque segment rectiligne d'une électrode soit déterminée aléatoirement favorise une répartition aléatoire des points d'émission EP, ce qui améliore la qualité des images.

D'une façon générale, l'axe latéral Y est sécant de l'axe longitudinal X. L'axe latéral Y peut par exemple être perpendiculaire à l'axe longitudinal X.

La figure 3E représente une superposition d'un réseau de guides de lumière et d'un réseau d'électrodes, dans lequel l'axe longitudinal X est perpendiculaire de l'axe latéral Y. Selon cette configuration :

- Chaque guide de lumière 11 s'étend entre deux bordures opposées selon l'axe longitudinal X et chaque électrode s'étend entre deux bordures opposées selon l'axe latéral Y.
- Chaque guide de lumière 11 s'étend selon des segments rectilignes formant différents angles α par rapport à l'axe longitudinal X, avec une alternance d'angles aigus positifs et négatifs. Dans cet exemple, la valeur absolue de α est identique pour chaque segment, l'angle α étant alternativement positif et négatif. Deux guides de lumière adjacents sont translatés l'un par rapport à l'autre selon une hauteur h, telle qu'explicitée dans (5), perpendiculairement à l'axe longitudinal X.
- Chaque électrode 13 s'étend selon des segments rectilignes formant différents angles β par rapport à l'axe latéral Y, avec une alternance d'angles positifs et négatifs. Dans cet exemple, la valeur absolue de β est identique pour chaque segment. Deux électrodes adjacentes sont translatées l'une par rapport à l'autre selon une hauteur h', telle qu'explicitée dans (5'), perpendiculairement à l'axe latéral Y.
- Pour chaque segment rectiligne d'électrode 13 ou de guide de lumière 11, $|\beta| = |\alpha|$.

Sur la figure 3E, on a également représenté une unité de commande de lumière 20 permettant d'adresser sélectivement une lumière laser dans chaque guide de lumière 11. De préférence, l'unité de commande de lumière 20 peut comporter des sources laser 21, chaque source laser étant optiquement couplée à plusieurs de guides de lumière 11. Chaque source laser 21 peut être activée indépendamment d'une autre. Comme précédemment évoqué, on dispose de $N_{las}$ sources laser 21 différentes pouvant être simultanément activées. Sur la figure 3E, on a représenté deux sources laser 20 et leurs couplages respectifs, en traits pleins et pointillés.

Sur la figure 3E, on a également représenté une unité de commande d'électrodes 23, permettant de polariser sélectivement chaque électrode 13. De préférence, plusieurs électrodes sont simultanément activables, formant des groupes d'électrodes. On dispose de $N_{el}$ groupes d'électrodes 13 . Sur la figure 3E on a représenté deux groupes d'électrodes et leurs couplages respectifs, en traits pleins et pointillés.

Chaque point d'émission EP est disposé à l'intersection d'un guide de lumière et d'une électrode. Un point d'émission EP est activé lorsque le guide de lumière est illuminé par une lumière laser et lorsque l'électrode est polarisée, de façon à permettre une extraction de la lumière se propageant dans le guide de lumière et l'émission d'une onde lumineuse par le film holographique 14.

Dans chaque sous-ensemble de points d'émission $EPD_{ij}$, la répartition des points d'émission EP dépend de la répartition des guides de lumière 11 et des électrodes 13 simultanément activés. Ainsi, à chaque sous-ensemble de points d'émission $EPD_{ij}$ est assigné un groupe de guides de lumière et un groupe d'électrodes. Deux sous-ensembles différents sont associés à différents guides de lumière et/ou à différentes électrodes. Une même association guide de lumière / électrode est assignée à un seul sous-groupe.

Si $N_X$ et $N_Y$ correspondent au nombre total de guides de lumière et d'électrodes, et si $n_X$ et $n_Y$ correspondent au nombre de guides de lumière et d'électrodes simultanément activés pour former un sous-ensemble de points d'émission $EPD_{ij}$, chaque sous-ensemble de points d'émission est défini en tirant aléatoirement $n_X$ guides de lumière parmi les $N_X$ guides de lumière disponibles ainsi que $n_Y$ électrodes parmi les $N_Y$ électrodes disponibles, en respectant la condition selon laquelle un même couple guide de lumière/électrode ne peut être sélectionné que pour un seul sous-ensemble. On forme alors un groupe de guides de lumière, comportant $n_X$ guides de lumière, et un groupe d'électrodes, comportant $n_Y$ électrodes.

Qu'il s'agisse des guides de lumière ou des électrodes, les segments rectilignes d'un même guide de lumière et d'une même électrode peuvent avoir des longueurs différentes. La variation de longueur des segments rectilignes d'un même guide d'onde (ou d'une même électrode) peut être de ±50% par rapport à une longueur moyenne.

La configuration de chaque guide de lumière 11, tel que représenté sur la figure 3E, est obtenue en prenant en compte une valeur d'angle α prédéterminée. Un autre paramètre pris en compte est le nombre total $I$ de segments rectilignes formant un même guide de lumière. La longueur de chaque segment rectiligne est ensuite déterminée de façon aléatoire ou pseudo-aléatoire.

Sur la figure 3E, les guides de lumière 11 s'étendent, parallèlement à l'axe longitudinal X, selon une longueur $D_X$. Soit $D_i$ la longueur du projeté d'un segment rectiligne sur l'axe longitudinal X, désignée par le terme « longueur selon l'axe X ». Soit $v_i$, une valeur aléatoire comprise entre 0 et 1. Chaque longueur $D_i$, selon l'axe longitudinal X, d'un segment est telle que :

$$D_i = \frac{D_X}{I}(1 + v_{i+1} - v_i) \ (6)$$

lorsque $i = 1 \ldots I - 1$ où $I$ est le nombre de segments rectiligne successifs le long de l'axe longitudinal X. La longueur du segment rectiligne $D_I$ d'ordre $I$ est telle que

$$D_I = D_X - \sum_{i=1}^{I-1} D_i \quad (6')$$

Le même raisonnement peut être mené pour les électrodes, en prenant en compte un nombre total $J$ de segments rectilignes pour une même électrode. Les électrodes s'étendent, parallèlement à l'axe Y, selon une longueur $D_Y$. Soit $D_j$ la longueur du projeté d'un segment sur l'axe latéral, désignée par le terme « longueur selon l'axe latéral Y ». Soit $v_j$, une valeur aléatoire comprise entre 0 et 1. Chaque longueur de chaque segment rectiligne, selon l'axe latéral Y, est telle que :

$$D_j = \frac{D_Y}{J}(1 + v_{j+1} - v_j) \ (7)$$

lorsque $j$ = 1 .....$J$ - 1 où $J$ est le nombre de segments rectilignes successifs le long de l'axe latéral Y.

$$D_J = D_Y - \sum_{j=1}^{J-1} D_j \quad (7')$$

Quel que soit le mode de réalisation, entre deux segments rectilignes consécutifs, une portion de liaison doit être ménagée, de façon à préserver un rayon de courbure permettant que la propagation de la lumière dans le guide de lumière soit suffisante entre les deux segments consécutifs. Dans la portion de liaison, les guides de lumière s'étendent selon un certain rayon de courbure, de façon à joindre les deux segments rectilignes consécutifs.

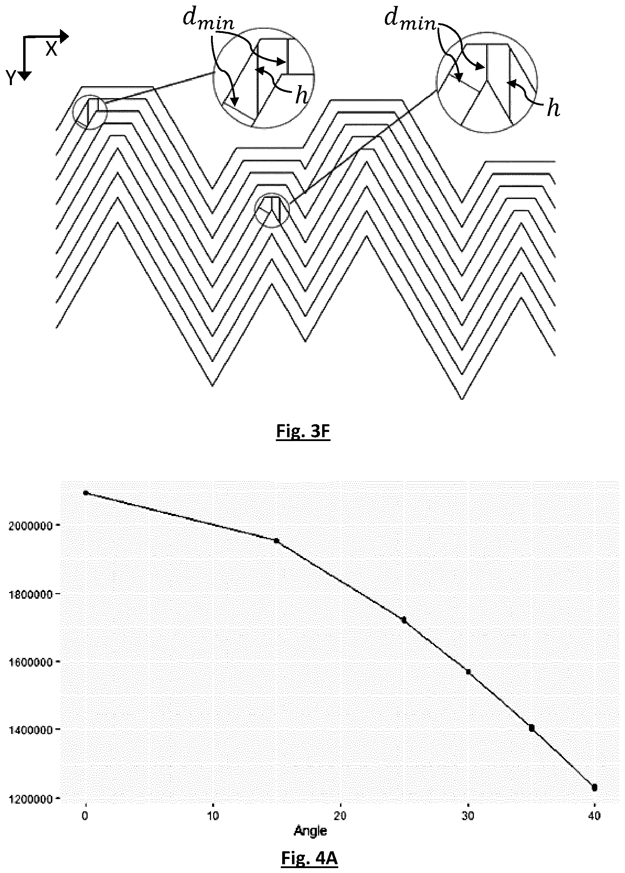

La figure 3F montre une variante de réalisation, entre deux segments rectilignes inclinés consécutifs, une partie parallèle à l'axe longitudinal X est introduite, ou, de façon plus générale, parallèle à une bordure de la surface d'émission. Une telle configuration permet d'adapter la forme des guides de lumière à la forme de la surface d'émission, en particulier au niveau de singularités, telles des bordures, de la surface d'émission.

Les inventeurs ont évalué les performances du dispositif 1 tel que décrit en lien avec les figures 3A à 3F, en se basant sur des simulations. Les simulations ont été effectuées en utilisant des fonctions de type B-splines.

Dans une première simulation, on a estimé le nombre de points d'émission en fonction de l'angle $\alpha$ et du nombre de pics, le nombre de pics correspondant au nombre de segments moins un. Un pic correspond à une jonction entre deux segments consécutifs. La figure 4A représente le nombre de points d'émission (axe des ordonnées) en considérant le nombre de pics (fixé à 25) en fonction de l'angle (axe des abscisses - unité degré). La figure 4A a été établie en considérant une disposition des guides de lumière et des électrodes telle que décrite en lien avec la figure 3E, avec $|\beta| = |\alpha|$. Par ailleurs, on a pris en compte un nombre $n_X$ de guides de lumière égal à 9 et un nombre $n_Y$ d'électrodes égal à 10.

La figure 4A montre que plus l'angle augmente, plus le nombre de points d'émission diminue. On rappelle que la configuration $\alpha = 0$ correspond à une situation dans laquelle les guides de lumière et les électrodes sont disposés selon un maillage orthogonal régulier. Une telle répartition n'est pas acceptable, car la périodicité du maillage induit une image bruitée, difficilement exploitable. La corrélation entre le nombre de points d'émission et l'angle peut s'expliquer par l'expression (5) : Plus $\alpha$ augmente, plus la hauteur de translation $h$ entre deux guides de lumière adjacents augmente, ce qui réduit le nombre de guides de lumière que l'on peut disposer sur une même surface. Il en est de même des électrodes, en prenant en compte l'expression (5').

Simulation de performances en terme de qualité d'image

Les inventeurs ont défini deux critères pour quantifier la qualité de l'image formée, sur la rétine, par auto-focalisation des points d'émission d'un même sous-ensemble $EPD_{ij}$.

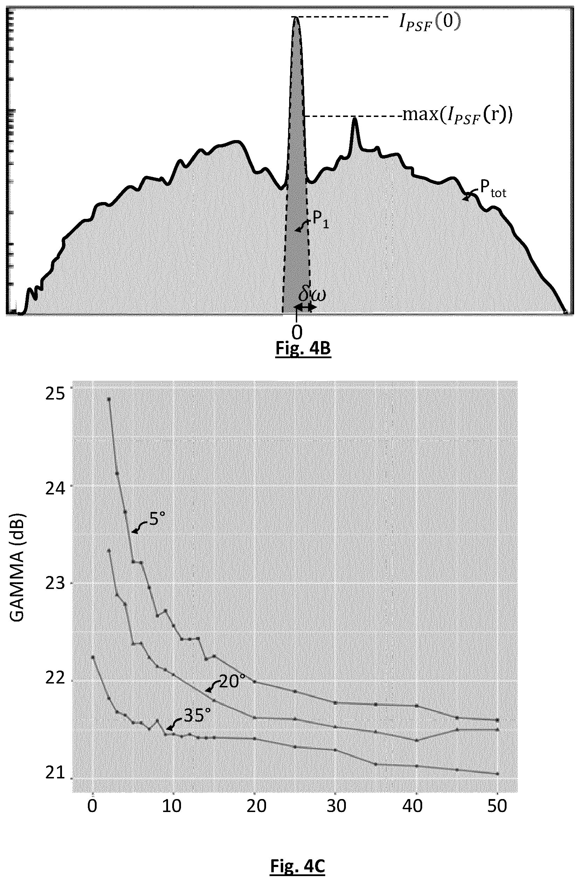

Un premier critère est le rapport signal sur bruit $SNR$ d'une réponse percussionnelle du système formé par la surface d'émission, la pupille et la lentille, usuellement désignée par l'acronyme PSF (Point Spread Function). La PSF correspond à l'image d'un point sur la rétine. La figure 4B illustre la PSF, en représentant une distribution spatiale de l'intensité sur la rétine. Sur la figure 4B, l'axe des ordonnées correspond à l'intensité lumineuse $I_{PSF}(r)$ de l'image formée sur la rétine et l'axe des abscisses correspond à une distance r par rapport à l'origine, l'origine correspondant à la position du point formé sur la rétine.

Le rapport signal sur bruit est tel que :

$$SNR = 10 \, log_{10} \left( \frac{I_{PSF}(0)}{\max\limits_{r>\delta w}(I_{PSF}(r))} \right) \quad (8)$$

- $I_{PSF}(0)$ est la hauteur du pic central ;
- $\delta w$ correspond à la demi-largeur du pic central d'intensité formé autour des premiers zéro de la figure d'Airy. Lorsque le système est parfait, la PSF peut être modélisée par une figure d'Airy. La largeur $\delta w$ correspond la largeur entre le sommet du pic d'intensité et le premier « zéro » de la figure d'Airy ;
- $\max\limits_{r>\delta w}(I_{PSF}(r))$ représente la valeur maximale de l'intensité en dehors du pic central d'intensité.

En prenant l'hypothèse d'un système parfait, dont la PSF est modélisée par une figure d'Airy, le *SNR* est tel que :

$$SNR_{Airy} = 10 \, log_{10} \left( \frac{I_{PSF-Airy}(0)}{I_{PSF-Airy}(r_{max})} \right) \quad (8')$$

où $I_{PSF-Airy}(0)$ est la hauteur du pic central de la figure d'Airy et $I_{PSF-Airy}(r_{max})$ est la hauteur du pic secondaire de la figure d'Airy. On estime que $SNR_{Airy} \cong 17.578 \, dB$

Un deuxième critère pour quantifier l'efficacité de l'auto-focalisation est le ratio de puissance, noté $\gamma$, avec :

$$\gamma = -10 \, log_{10} \left( \frac{P_1}{P_{tot}} \right) \quad (9)$$

- $P_1$ est la puissance du pic central, qui correspond au volume matérialisé par l'aire du pic central représenté en grisé sombre sur la figure 4B ;
- $P_{tot}$ est la puissance lumineuse totale, qui correspond au volume matérialisé par l'aire totale de la figure 4B (grisé clair et grisé sombre).

Il est optimal que le ratio de puissance soit le plus faible possible, c'est-à-dire que $P_1$ tende vers $P_{tot}$.

En prenant l'hypothèse d'un système parfait, dont la PSF est modélisée par une figure d'Airy, le ratio de puissance $\gamma_{Airy}$ est tel que :

$$\gamma_{Airy} = -10 \, log_{10} s \left( \frac{P_{1-Airy}}{P_{tot-Airy}} \right) \quad (9')$$

où $P_{1-Airy}$ et $P_{tot-Airy}$ sont les puissances respectives du pic central et de l'ensemble de la figure d'Airy. On estime que $\gamma_{Atry} \cong 0.77 \, dB$.

Les paramètres *SNR* et $\gamma$ sont reliés à la répartition des points d'émission. La figure 4C représente une estimation du paramètre $\gamma$ (axe des ordonnées - unité dB), tel que défini dans (9), en fonction du nombre de pics (axe des abscisses) et pour différents angles $\alpha$. La simulation a été effectuée en considérant que le nombre de points d'émission d'un même sous-ensemble est égal à 55. Cela signifie qu'un pixel de l'image formée sur la rétine est obtenu par auto-focalisation de 55 points d'émission répartis sur la surface d'émission, en regard de la pupille de l'oeil. La figure 4C montre que le paramètre $\gamma$ est relativement insensible au nombre de pics, dès lors que ce dernier dépasse 10. On rappelle que le nombre de pics correspond, à une unité près, au nombre de segments.

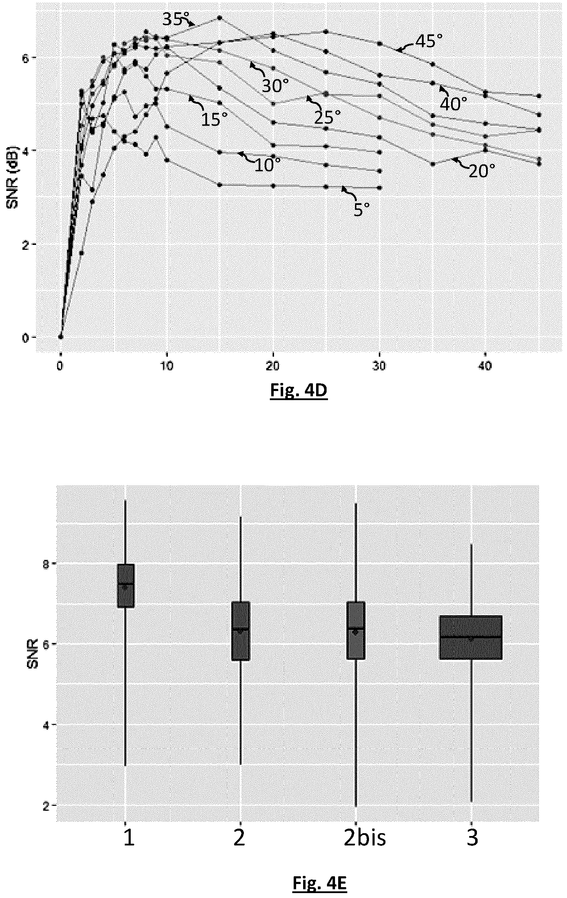

La figure 4D montre l'évolution du *SNR,* tel que défini dans (8) (axe des ordonnées - unité dB) en fonction du nombre de pics (axe des abscisses) et pour différents angles $\alpha$. La simulation a été effectuée en considérant que le nombre de points d'émission correspondant à un même sous-ensemble est égal à 55. La figure 4D montre que le nombre optimal de pics est supérieur à 5 et inférieur à 30, et cela pour une longueur, selon l'axe longitudinal (ou latéral, de 6 mm). La figure 4D permet de définir une plage optimale d'angles $\alpha$ comprise entre 20° et 40°, voire 45° lorsque le nombre de pics est supérieure à 20, et de préférence entre 25° et 35°. La figure 4D montre que l'augmentation du nombre de pics (au-delà de 20) est favorable à une configuration selon laquelle les angles sont élevés (> 30 °).

Le mode de réalisation précédemment décrit, chaque point d'émission est formé par une portion de film holographique illuminée par une lumière extraite d'un guide de lumière. D'autres façons de former un point d'émission peuvent être envisagées. Le film holographique peut être remplacé par un SLM (Spatial Light Modulator - Modulateur de lumière spatial) disposé en vis-à-vis d'un réseau de diffraction. Contrairement à un hologramme, un SLM ne dévie pas la direction d'un faisceau extrait d'un guide de lumière par le réseau de diffraction. La relation de phase apportée par le SLM oriente le faisceau résultant d'une somme cohérente des faisceaux respectivement émis par les points d'émission d'un même sous-ensemble.

Essai comparatif

Deux configurations de l'art antérieur, similaires à la configuration décrite en lien avec la figure 2, ont été comparées à une configuration selon l'invention. Chaque configuration comportait 9 guides de lumière et 10 électrodes répartis selon une surface de longueur $D_X$ et de largeur $D_Y$ égales à 6000 μm. On a considéré une pupille de diamètre 4000 μm. On a constitué des sous-ensembles de 55 points d'émission.
Selon chaque configuration de l'art antérieur, basées sur des formes sinusoïdales, Chaque guide de lumière prend une forme sinusoïdale définie par la fonction :

$$g(x) = \sum_{p=1}^{P} a_p \cos\left(\frac{2\pi x}{b_p}\right) \quad (10)$$

où $a_p$ et $b_p$ sont des réels positifs, correspondant respectivement à des amplitudes et des périodes de la fonction cosinus de l'expression (10).
Chaque électrode prend une forme sinusoïdale définie par la fonction :

$$g'(y) = \sum_{q=1}^{Q} a'_q \cos\left(\frac{2\pi y}{b'_q}\right) \quad (10')$$

où $a'_q$ et $b'_q$ sont des réels positifs, correspondant respectivement à des amplitudes et des périodes de la fonction cosinus de l'expression (10').
Les inventeurs se sont basées sur deux configurations sinusoïdales, chaque configuration étant paramétrée par quatre paramètres $\begin{pmatrix} a_p \\ b_p \end{pmatrix}\begin{pmatrix} a'_q \\ b'_q \end{pmatrix}$. Chaque configuration comportait deux fonctions cosinus (P = 2 ; Q = 2)
Le tableau 1 comporte les paramètres de chaque configuration.

Tableau 1

|  | 1ère configuration | 2ième configuration |
|---|---|---|
| $\begin{pmatrix} a'_q \\ b'_q \end{pmatrix}$. | $\begin{pmatrix} 300 \\ 2200 \end{pmatrix}\begin{pmatrix} 60 \\ 1530 \end{pmatrix}$ | $\begin{pmatrix} 300 \\ 1750 \end{pmatrix}\begin{pmatrix} 350 \\ 1280 \end{pmatrix}$ |
| $\begin{pmatrix} a_p \\ b_p \end{pmatrix}$ | $\begin{pmatrix} 200 \\ 600 \end{pmatrix}\begin{pmatrix} 140 \\ 1100 \end{pmatrix}$ | $\begin{pmatrix} 100 \\ 1000 \end{pmatrix}\begin{pmatrix} 150 \\ 1530 \end{pmatrix}$ |

Une troisième configuration a été testée, représentative de l'invention, comportant 9 segments rectilignes (donc 8 pics), et en prenant en compte un angle $\alpha$ = 35°.
Chaque configuration a fait l'objet d'un tirage aléatoire, de façon à définir, pour chaque pixel de l'image, des groupes de guides de lumière et d'électrodes à activer. Chaque groupe de guides de lumière et d'électrodes simultanément activés permet de former des sous-ensembles comportant respectivement 55 points d'émission.
La deuxième configuration a fait l'objet de deux tirages aléatoires. Le deuxième tirage aléatoire forme une configuration désignée « 2bis ».
Le tableau 2 représente le nombre de points d'émission obtenus dans chaque configuration, la densité (nombre de points par mm²), le nombre de pixels formés sur l'image et la taille de l'image en pixels.

Tableau 2

| Configuration | Nombre de points | Densité | Nombre de pixels | Taille de l'image |
|---|---|---|---|---|
| 1 | $4.5 \cdot 10^5$ | $3.62 \cdot 10^4$ | 7800 | 78 x 100 |
| 2 ; 2bis | $4.8 \cdot 10^5$ | $3.79 \cdot 10^4$ | 8085 | 80 x 100 |
| 3 | $14.1 \cdot 10^5$ | $11.2 \cdot 10^4$ | 28714 | 287 x 100 |

On observe que la configuration selon l'invention permet d'obtenir un nombre plus élevé de points (facteur supérieur à 3) pour une même surface d'émission. Cela permet d'obtenir plus de trois fois plus de pixels sur l'image, d'où une taille d'image plus élevée. Cela confirme l'avantage conféré par la disposition des guides de lumière et des électrodes décrite en lien avec les figures 3A à 3E.

On a estimé, pour chaque pixel de l'image, le SNR tel qu'explicité dans (8). La figure 4E représente, dans chaque configuration, le SNR moyen ainsi que la dispersion des valeurs de SNR estimées pour les différents pixels. La figure 4E correspond à une représentation en boite à moustaches, usuellement désigné par le terme boxplot, permettant de représenter la moyenne (point), la médiane (ligne au centre de chaque rectangle), les quartiles à 25% et à 75% (bordures horizontales de chaque rectangle), ainsi que les valeurs minimales et maximales (extrémités de chaque ligne). La largeur de chaque bloxplot est proportionnelle au nombre de pixels formés sur l'image. On observe que la mise en oeuvre de l'invention s'accompagne d'une légère réduction du SNR, ce dernier étant maintenu à un niveau acceptable, au profit d'une augmentation significative du nombre de pixels.

L'invention pourra être mise en oeuvre sur des dispositifs portables de réalité augmentée, en particulier des lunettes, ou des visières, ou, de façon plus générale, sur des surfaces transparentes destinées à être disposées face à un oeil de façon à former une image se superposant à l'image que perçoit l'œil à travers la surface transparente.

**Revendications**

**1.** Dispositif (1) de projection d'une image sur un oeil, le dispositif comportant un empilement (10) comprenant :

- des guides de lumière (11), chaque guide de lumière étant couplé à une pluralité de réseaux de diffraction (12), répartis le long du guide de lumière, chaque réseau de diffraction étant électriquement modulable, chaque réseau de diffraction (12) étant configuré pour être modulé électriquement de façon à extraire une lumière se propageant dans le guide de lumière ;
- des électrodes (13), chaque électrode étant associée à plusieurs réseaux de diffraction (12) respectivement couplés à différents guides de lumière, chaque électrode étant configurée pour moduler chaque réseau de diffraction auquel elle est associée ;
- le dispositif comportant différents points d'émission (EP) répartis le long de la surface d'émission, chaque point d'émission correspondant à une association entre une électrode et un réseau de diffraction couplé à un guide de lumière ;

le dispositif étant défini en ce que :

- chaque guide de lumière s'étend en formant des segments rectilignes;
- des segments rectilignes de différents guides de lumière sont disposés parallèlement les uns aux autres, en étant décalés les uns des autres selon une direction perpendiculaire à l'axe longitudinal ;
- les points d'émission *(EP)* sont répartis en formant des sous-ensembles *(EPD$_{ij}$)*, les points d'émission d'un même sous-ensemble étant formés par un groupe d'électrodes superposées à groupe de guides de lumière, de telle sorte que chaque électrode (11) du groupe d'électrodes est configurée pour moduler les réseaux de diffraction (12) couplés à différents guides de lumière (11) du groupe de guides de lumière ;
- les points d'émission *(EP)* d'un même sous-ensemble *(EPD$_{ij}$)* sont configurés pour émettre une onde lumineuse selon une même direction $(\vec{k}_{ij})$;

le dispositif étant **caractérisé en ce que** :
deux segments rectilignes successifs d'un même guide de lumière forment respectivement deux angles aigus ($\alpha$, -$\alpha$) différents par rapport à un axe longitudinal (X).

**2.** Dispositif selon la revendication 1, dans lequel :

- la surface d'émission est délimitée par une bordure ;
- des segments rectilignes de guides de lumière sont parallèles les uns aux autres, selon une direction sécante de la bordure ;
- au moins un guide de lumière s'étend parallèlement à la bordure.

**3.** Dispositif selon l'une quelconque des revendications 1 à 2, dans lequel les angles aigus formés par deux segments rectilignes successifs d'un guide de lumière, par rapport à l'axe longitudinal, sont de signes opposés.

**4.** Dispositif selon la revendication 3, dans lequel les angles aigus formés par deux segments rectilignes successifs d'un guide de lumière (11), par rapport à l'axe longitudinal (X), ont la même valeur absolue.

**5.** Dispositif selon l'une quelconque des revendications précédentes, dans lequel l'angle aigu, formé par chaque segment rectiligne d'un guide de lumière, avec l'axe longitudinal, est compris entre 20° et 45 en valeur absolue.

**6.** Dispositif selon l'une quelconque des revendications précédentes, dans lequel chaque guide de lumière comporte une densité de segments rectilignes comprise entre 0.5 et 5 segments par mm selon l'axe longitudinal.

**7.** Dispositif selon l'une quelconque des revendications précédentes, dans lequel au moins deux segments rectilignes d'un même guide de lumière s'étendent selon deux longueurs différentes respectivement.

**8.** Dispositif selon l'une quelconque des revendications précédentes dans lequel

- chaque électrode (13) s'étend en formant des segments rectilignes ($13_j$), deux segments rectilignes successifs d'une même électrode formant respectivement deux angles aigus ($\beta$, - $\beta$) différents par rapport à un axe latéral (Y) ;
- des segments rectilignes de différentes électrodes sont disposés parallèlement les uns aux autres, en étant décalés les uns des autres selon une direction perpendiculaire à l'axe latéral.

**9.** Dispositif selon la revendication 8, dans lequel :

- la surface d'émission est délimitée par une bordure ;
- des segments d'électrodes sont parallèles les uns aux autres, selon une direction sécante de la bordure ;
- au moins une électrode s'étend parallèlement à la bordure.

**10.** Dispositif selon l'une quelconque des revendications 8 à 9, dans lequel les angles aigus formés par les segments rectilignes successifs d'une électrode, par rapport à l'axe latéral, sont de signes opposés.

**11.** Dispositif selon l'une quelconque des revendications 8 à 10, dans lequel l'axe latéral (Y) est perpendiculaire de l'axe longitudinal (X).

**12.** Dispositif selon l'une quelconque des revendications précédentes, dans lequel l'empilement (10) est formé sur un support transparent (15).

**13.** Dispositif selon l'une quelconque des revendications précédentes, dans lequel le nombre de points d'émission de chaque sous-ensemble ($EPD_{ij}$)est supérieur à 40.

**14.** Dispositif selon l'une quelconque des revendications précédentes, comportant un film holographique (14), subdivisé en différentes zones élémentaires, chaque zone élémentaire étant associée à un réseau de diffraction (12), et configurée pour émettre une onde lumineuse, selon un axe d'émission ($Z_{ij}$), sous l'effet d'une lumière extraite par le réseau de diffraction auquel elle est associée, chaque association entre une zone élémentaire et un réseau de diffraction formant un point d'émission (EP) de lumière selon l'axe d'émission.

**15.** Lunette, comportant des verres de lunette, la lunette comportant un dispositif selon l'une quelconque des revendications précédentes, l'empilement (10) étant formé sur au moins un verre de la lunette.

**Patentansprüche**

1. Vorrichtung (1) zur Projektion eines Bildes auf ein Auge, wobei die Vorrichtung einen Stapel (10) aufweist, umfassend:

    - Lichtleiter (11), wobei jeder Lichtleiter mit einer Mehrzahl von Beugungsgittern (12) gekoppelt ist, die entlang des Lichtleiters verteilt sind, wobei jedes Beugungsgitter elektrisch modulierbar ist, wobei jedes Beugungsgitter (12) dazu ausgestaltet ist, elektrisch so moduliert zu werden, dass ein Licht ausgekoppelt wird, das sich in dem Lichtleiter ausbreitet;
    - Elektroden (13), wobei jede Elektrode mehreren Beugungsgittern (12) zugeordnet ist, die jeweils mit verschiedenen Lichtleitern gekoppelt sind, wobei jede Elektrode dazu ausgestaltet ist, jedes Beugungsgitter, dem sie zugeordnet ist, zu modulieren;
    - wobei die Vorrichtung verschiedene Emissionspunkte (EP) aufweist, die entlang der Emissionsfläche verteilt sind, wobei jeder Emissionspunkt einer Zuordnung zwischen einer Elektrode und einem mit einem Lichtleiter gekoppelten Beugungsgitter entspricht;

    wobei die Vorrichtung dadurch definiert ist, dass

    - jeder Lichtleiter sich unter Bildung geradliniger Segmente erstreckt;
    - geradlinige Segmente von verschiedenen Lichtleitern parallel zueinander angeordnet sind, wobei sie voneinander gemäß einer senkrecht zur Längsachse verlaufenden Richtung versetzt sind;
    - die Emissionspunkte (EP) unter Bildung von Teilmengen (EPD$_{ij}$) verteilt sind, wobei die Emissionspunkte einer selben Teilmenge durch eine Gruppe von Elektroden gebildet werden, die einer Gruppe von Lichtleitern überlagert sind, so dass jede Elektrode (11) der Gruppe von Elektroden dazu ausgestaltet ist, die Beugungsgitter (12) zu modulieren, die mit verschiedenen Lichtleitern (11) der Gruppe von Lichtleitern gekoppelt sind;
    - die Emissionspunkte (EP) einer selben Teilmenge (EPD$_{ij}$) dazu ausgestaltet sind, eine Lichtwelle gemäß einer selben Richtung ($\vec{k}_{ij}$) zu emittieren;

    wobei die Vorrichtung **dadurch gekennzeichnet ist, dass**:
    zwei aufeinanderfolgende geradlinige Segmente eines selben Lichtleiters jeweils zwei verschiedene spitze Winkel ($\alpha$, -$\alpha$) in Bezug auf eine Längsachse (X) bilden.

2. Vorrichtung nach Anspruch 1, bei der:

    - die Emissionsfläche durch einen Rand begrenzt wird;
    - geradlinige Segmente von Lichtleitern gemäß einer den Rand schneidenden Richtung parallel zueinander sind;
    - mindestens ein Lichtleiter sich parallel zu dem Rand erstreckt.

3. Vorrichtung nach einem der Ansprüche 1 bis 2, bei der die spitzen Winkel, die von zwei aufeinanderfolgenden geradlinigen Segmenten eines Lichtleiters in Bezug auf die Längsachse gebildet werden, entgegengesetzte Vorzeichen haben.

4. Vorrichtung nach Anspruch 3, bei der die spitzen Winkel, die von zwei aufeinanderfolgenden geradlinigen Segmenten eines Lichtleiters (11) in Bezug auf die Längsachse (X) gebildet werden, den gleichen absoluten Wert haben.

5. Vorrichtung nach einem der vorhergehenden Ansprüche, bei welcher der spitze Winkel, der von jedem geradlinigen Segment eines Lichtleiters mit der Längsachse gebildet wird, als absoluter Wert zwischen 20° und 45° beträgt.

6. Vorrichtung nach einem der vorhergehenden Ansprüche, bei der jeder Lichtleiter eine Dichte von geradlinigen Segmenten zwischen 0,5 und 5 Segmenten je mm gemäß der Längsachse aufweist.

7. Vorrichtung nach einem der vorhergehenden Ansprüche, bei der sich mindestens zwei geradlinige Segmente eines selben Lichtleiters gemäß zwei jeweils verschiedenen Längen erstrecken.

8. Vorrichtung nach einem der vorhergehenden Ansprüche, bei der

    - jede Elektrode (13) sich unter Bildung von geradlinigen Segmenten (13$_j$) erstreckt, wobei zwei aufeinanderfolgende geradlinige Segmente einer selben Elektrode jeweils zwei verschiedene spitze Winkel ($\beta$, -$\beta$) in Bezug

auf eine seitliche Achse (Y) bilden;
- geradlinige Segmente von verschiedenen Elektroden parallel zueinander angeordnet sind, wobei sie voneinander gemäß einer senkrecht zu der seitlichen Achse verlaufenden Richtung versetzt sind.

9. Vorrichtung nach Anspruch 8, bei der:

- die Emissionsfläche durch einen Rand begrenzt wird;
- Segmente von Elektroden gemäß einer den Rand schneidenden Richtung parallel zueinander sind;
- mindestens eine Elektrode sich parallel zu dem Rand erstreckt.

10. Vorrichtung nach einem der Ansprüche 8 bis 9, bei der die spitzen Winkel, die von den aufeinanderfolgenden geradlinigen Segmenten einer Elektrode in Bezug auf die seitliche Achse gebildet werden, entgegengesetzte Vorzeichen haben.

11. Vorrichtung nach einem der Ansprüche 8 bis 10, bei der die seitliche Achse (Y) senkrecht zu der Längsachse (X) verläuft.

12. Vorrichtung nach einem der vorhergehenden Ansprüche, bei welcher der Stapel (10) auf einem transparenten Träger (15) gebildet ist.

13. Vorrichtung nach einem der vorhergehenden Ansprüche, bei der die Anzahl von Emissionspunkten jeder Teilmenge ($EPD_{ij}$) mehr als 40 beträgt.

14. Vorrichtung nach einem der vorhergehenden Ansprüche, die eine holografische Folie (14) aufweist, die in verschiedene elementare Bereiche unterteilt ist, wobei jeder elementare Bereich einem Beugungsgitter (12) zugeordnet ist und dazu ausgestaltet ist, eine Lichtwelle gemäß einer Emissionsachse ($Z_{ij}$) unter der Wirkung eines Lichts zu emittieren, das von dem Beugungsgitter, dem er zugeordnet ist, ausgekoppelt wird, wobei jede Zuordnung zwischen einem elementaren Bereich und einem Beugungsgitter einen Emissionspunkt (EP) für Licht gemäß der Emissionsachse bildet.

15. Brille, die Brillengläser aufweist, wobei die Brille eine Vorrichtung nach einem der vorhergehenden Ansprüche aufweist, wobei der Stapel (10) auf mindestens einem Glas der Brille gebildet ist.

**Claims**

1. Device (1) for projecting an image onto an eye, the device comprising a stack (10) comprising:

- light guides (11), each light guide being coupled to a plurality of diffraction gratings (12), which are distributed over the length of the light guide, each diffraction grating being electrically modulatable, each diffraction grating (12) being configured to be electrically modulated so as to extract light propagating through the light guide;
- electrodes (13), each electrode being associated with a plurality of diffraction gratings (12) coupled to various light guides, respectively, each electrode being configured to modulate each diffraction grating with which it is associated;
- the device comprising various emission points (EP) distributed over the length of the emission area, each emission point corresponding to an association between one electrode and one diffraction grating coupled to one light guide;

the device being defined so that:

- each light guide extends in such a way as to form rectilinear segments;
- rectilinear segments of various light guides are placed parallel to one another, but offset from one another in a direction perpendicular to the longitudinal axis;
- the emission points (EP) are distributed in such a way as to form subsets ($EPD_{ij}$), the emission points of a given subset being formed by a group of electrodes superposed on a group of light guides, such that each electrode (11) of the group of electrodes is configured to modulate the diffraction gratings (12) coupled to various light guides (11) of the group of light guides;

- the emission points (*EP*) of a given subset (*EPD$_{ij}$*) are configured to emit a light wave in the same direction ($\vec{k}_{ij}$);

the device being **characterized in that**

two successive rectilinear segments of a given light guide makie two different acute angles ($\alpha, -\alpha$) to a longitudinal axis (X), respectively.

2. Device according to claim 1, wherein:

   - the emission area is bounded by a border;
   - rectilinear segments of light guides are parallel to one another, in a direction secant to the border;
   - at least one light guide extends parallel to the border.

3. Device according to either one of claims 1 and 2, wherein the acute angles made by two successive rectilinear segments of a light guide, to the longitudinal axis, are of opposite signs.

4. Device according to Claim 3, wherein the acute angles made by two successive rectilinear segments of a light guide (11), to the longitudinal axis (X), have the same absolute value.

5. Device according to either one of the preceding claims, wherein the acute angle, made by each rectilinear segment of a light guide, to the longitudinal axis, is comprised between 20° and 45° in absolute value.

6. Device according to either one of the preceding claims, wherein each light guide comprises a density of rectilinear segments comprised between 0.5 and 5 segments per mm along the longitudinal axis.

7. Device according to either one of the preceding claims, wherein at least two rectilinear segments of a given light guide extend over two different lengths, respectively.

8. Device according to either one of the preceding claims, wherein:

   - each electrode (13) extends in such a way as to form rectilinear segments (13$_j$), two successive rectilinear segments of a given electrode making two different acute angles ($\beta, -\beta$) to a lateral axis (Y), respectively;
   - rectilinear segments of various electrodes are placed parallel to one another, but offset from one another in a direction perpendicular to the lateral axis.

9. Device according to Claim 8, wherein:

   - the emission area is bounded by a border;
   - segments of electrodes are parallel to one another, in a direction secant to the border;
   - at least one electrode extends parallel to the border.

10. Device according to either one of claims 8 or 9, wherein the acute angles made by the successive rectilinear segments of an electrode, to the lateral axis, are of opposite signs.

11. Device according to either one of claims 8 to 10, wherein the lateral axis (Y) is perpendicular to the longitudinal axis (X).

12. Device according to either one of the preceding claims, wherein the stack (10) is formed on a transparent carrier (15).

13. Device according to either one of the preceding claims, wherein the number of emission points of each subset (*EPD$_{ij}$)* is higher than 40.

14. Device according to either one of the preceding claims, comprising a holographic film (14), subdivided into various elementary regions, each elementary region being associated with one diffraction grating (12), and configured to emit a light wave, along an emission axis (Z$_{ij}$), under the effect of light extracted by the diffraction grating with which said region is associated, each association between one elementary region and one diffraction grating forming one point (EP) of emission of light along the emission axis.

15. Glasses, comprising lenses, the glasses comprising a device according to either one of the preceding claims, the stack (10) being formed on at least one lens of the glasses.

**Fig. 1A**

**Fig. 1B**

**Fig. 1C**

**Fig. 1D**

**Fig. 2A**

**Fig. 2B**

**Fig. 3A**

**Fig. 3B**

**Fig. 3C**

**Fig. 3D**

**Fig. 3E**

**Fig. 3F**

**Fig. 4A**

24

$I_{PSF}(0)$

$-\max(I_{PSF}(\mathrm{r}))$

$P_{tot}$

$P_1$

$\delta\omega$

0

**Fig. 4B**

5°

20°

35°

GAMMA (dB)

**Fig. 4C**

**Fig. 4D**

**Fig. 4E**

## RÉFÉRENCES CITÉES DANS LA DESCRIPTION

**Documents brevets cités dans la description**

- US 9632317 B
- US 2014204455 A

- FR 3022642 A1

**Littérature non-brevet citée dans la description**

- **RAINOUARD FABIAN et al.** Improved mathematical model for a dense network of waveguide and electrode design. *PROCEEDINGS OF SPIE,* 05 Mars 2021, vol. 11689, 116891N-116891N

- **MARTINEZ C.** See-through holographic retinal projection display concept. *Optica,* Octobre 2018, vol. 5 (10